# EUROPEAN PATENT APPLICATION

(11) **EP 3 749 058 A1**
(43) Date of publication of application: **09.12.2020**
(21) Application number: 18859946.8
(22) Date of filing: 15.10.2018
(51) Int. Cl.: H05B 33/08, H04B 10/116

(54) **FREQUENCY MODULATION CIRCUIT, DRIVE CIRCUIT AND CONTROL METHOD THEREOF, AND LIGHTING SYSTEM**

(30) Priority: 30.01.2018 CN 201810092442
(71) Applicant: BOE TECHNOLOGY GROUP CO., LTD., Beijing 100015 (CN); BOE Optical Science And Technology Co., Ltd., Suzhou, Jiangsu 215021 (CN)
(72) Inventor: YU, Xing, Beijing 100176 (CN)
(74) Representative: Fritzsche, Thomas
(86) International application number: PCT/CN2018/110233
(87) International publication number: WO 2019/148888

(57) **Abstract**

A frequency modulation circuit, a drive circuit and its control method, and an illumination system are described, wherein the frequency modulation circuit includes: a rectification filter sub-circuit, a voltage stabilizing sub-circuit, a control sub-circuit and a switching sub-circuit. The frequency modulation circuit can enable the LED to emit light signals carrying content information, so that users can receive said light signals to obtain the content information.

## Description

### Related Application

The present application claims the priority of Chinese Patent Application CN201810092442.1 filed on Jan. 31, 2018, the entire disclosure of which is incorporated herein by reference.

### Technical Field

The present disclosure relates to the field of electronic techniques, in particular to a frequency modulation circuit, a drive circuit and its control method and an illumination system.

### Background

As green energy-saving products, Light Emitting Diode (LED) lamps have become more and more popular in recent years. In order to meet the needs of the characteristics of the LED, LED drive circuits have emerged.

When people go to museums to see collections of cultural relics or go to exhibitions, for example, the light of LED illumination in the museums or exhibitions is usually dim, so it is hard to see the brief introductions of certain cultural relics or related details of the exhibitions.

### Summary

According to an aspect of the present disclosure, a frequency modulation circuit is provided, which comprises: a rectification filter sub-circuit, a voltage stabilizing sub-circuit, a control sub-circuit and a switching sub-circuit; wherein
the rectification filter sub-circuit is connected to a first input terminal of the frequency modulation circuit, a second input terminal of the frequency modulation circuit and the voltage stabilizing sub-circuit, and is configured to convert signals input through the first input terminal into DC signals;
the voltage stabilizing sub-circuit is connected to the second input terminal and the control sub-circuit, and is configured to convert the DC signals into stable DC signals;
the control sub-circuit is connected to the second input terminal and the switching sub-circuit, and is configured to generate high-frequency driving signals under the control of the stable DC signals;
the switching sub-circuit is connected to the second input terminal and an output terminal of the frequency modulation circuit, and is configured to output signals of the second input terminal from the output terminal under the control of the high frequency driving signals.

Optionally, the rectification filter sub-circuit comprises: a first diode, a first resistor and a first capacitor; wherein
a first terminal of the first diode is connected to the first input terminal, and a second terminal of the first diode is connected to a first terminal of the first resistor;
a second terminal of the first resistor is connected to the voltage stabilizing sub-circuit;
a first terminal of the first capacitor is connected to the second terminal of the first resistor, and a second terminal of the first capacitor is connected to the second input terminal.

Optionally, the voltage stabilizing sub-circuit comprises: a regulator; wherein
a first terminal of the regulator is connected to the first terminal of the first capacitor, a second terminal of the regulator is connected to the control sub-circuit, and a third terminal of the regulator is connected to the second input terminal.

Optionally, the control sub-circuit comprises: a microprocessor; wherein
a first terminal of the microprocessor is connected to the second terminal of the regulator, a second terminal of the microprocessor is connected to the switching sub-circuit, and a third terminal of the microprocessor is connected to the second input terminal.

Optionally, the switching sub-circuit comprises: a first switch; wherein
a control pole of the first switch is connected to the second terminal of the microprocessor, a first pole of the first switch is connected to the output terminal, and a second pole of the first switch is connected to the second input terminal.

According to another aspect of the present disclosure, a drive circuit is provided, which comprises: a rectifier circuit, a LLC resonant half-bridge circuit, a control circuit, an output circuit, a charging pump circuit and the above-mentioned frequency modulation circuit; wherein
the rectifier circuit is connected to an AC input terminal, the charging pump circuit and the LLC resonant half-bridge circuit, and is configured to rectify signals obtained from the AC input terminal and output rectified current;
the charging pump circuit is connected to the LLC resonant half-bridge circuit, and is configured to convert the rectified current into sinusoidal current so as to be input into the LLC resonant half-bridge circuit;
the control circuit is connected to the LLC resonant half-bridge circuit and is configured to control operations of the LLC resonant half-bridge circuit;
the LLC resonant half-bridge circuit is connected to the output circuit and the frequency modulation circuit, and is configured to process the sinusoidal current to output a first signal and a second signal;
the output circuit is connected to the frequency modulation circuit and is configured to output a first current according to the first signal, the first current being a constant current;
the frequency modulation circuit is configured to output a second current under the control of the second signal.

Optionally, the drive circuit further comprises an electromagnetic interference filter circuit; wherein
the rectifier circuit is connected to the AC input terminal through the electromagnetic interference filter circuit, and the electromagnetic interference filter circuit is configured to restrain electromagnetic interferences in signals of the AC input terminal.

Optionally, the AC input terminal comprises: a first AC input terminal and a second AC input terminal, and the rectifier circuit comprises: a second diode, a third diode, a fourth diode and a fifth diode; wherein
a first terminal of the second diode is connected to the first AC input terminal, a second terminal of the second diode is connected to a second terminal of the third diode;
a first terminal of the third diode is connected to the second AC input terminal, and a second terminal of the third diode is connected to the charging pump circuit and the LLC resonant half-bridge circuit;
a first terminal of the fourth diode is connected to the charging pump circuit, and a second terminal of the fourth diode is connected to the second AC input terminal;
a first terminal of the fifth diode is connected to the charging pump circuit, and a second terminal of the fifth diode is connected to the first AC input terminal.

Optionally, the charging pump circuit comprises: a second capacitor, a third capacitor, a fourth capacitor and a sixth diode;
a first terminal of the second capacitor is connected to the rectifier circuit and the LLC resonant half-bridge circuit, and a second terminal of the second capacitor is connected to a second terminal of the third capacitor;
a first terminal of the third capacitor is connected to a second terminal of the sixth diode, and a second terminal of the third capacitor is connected to the LLC resonant half-bridge circuit;
a first terminal of the fourth capacitor is connected to the rectifier circuit and a second terminal of the fourth capacitor is grounded;
a first terminal of the sixth diode is connected to the second terminal of the third capacitor, and a second terminal of the sixth diode is connected to a first terminal of the fourth capacitor.

Optionally, the LLC resonant half-bridge circuit comprises: a second switch, a third switch, a first inductor, a second resistor, a third resistor, a fourth resistor, a fifth resistor, a sixth resistor, a seventh diode, a fifth capacitor and a transformer; the transformer comprises: a first primary winding, a first secondary winding corresponding to the first primary winding, a second primary winding and a second secondary winding corresponding to the second primary winding; wherein
a control pole of the second switch is connected to the control circuit, a first pole of the second switch is connected to the rectifier circuit and the charging pump circuit, and a second pole of the second switch is connected to a first terminal of the first inductor;
a control pole of the third switch is connected to the control circuit, a first pole of the third switch is connected to a first terminal of the first inductor, and a second pole of the third switch is connected to the charging pump circuit;
a second terminal of the first inductor is connected to a first input terminal of the first primary winding;
a second input terminal of the first primary winding is connected to a first terminal of the second resistor, and the first secondary winding is connected to the output circuit;
the first terminal of the second resistor is connected to the control circuit, and a second terminal of the second resistor is connected to a first terminal of the third resistor;
the first terminal of the third resistor is grounded, a second terminal of the third resistor is connected to a second pole of the third switch;
a first terminal of the fourth resistor is connected to the control circuit, and a second terminal of the fourth resistor is connected to a first terminal of the sixth resistor;
a first terminal of the fifth resistor is connected to the first terminal of the fourth resistor, and a second terminal of the fifth resistor is connected to the control circuit;
a first terminal of the sixth resistor is connected to a second terminal of the seventh diode, and a second terminal of the sixth resistor is connected to the control circuit;
a first terminal of the fifth capacitor is connected to the second terminal of the sixth resistor, and a second terminal of the fifth capacitor is connected to the second terminal of the fifth resistor;
a first terminal of the seventh diode is connected to a first input terminal of the second primary winding;
a second input terminal of the second primary winding is connected to the second terminal of the fifth capacitor and is grounded as well;
a first output terminal of the second secondary winding is connected to the first input terminal of the frequency modulation circuit, and a second output terminal of the second secondary winding is connected to the second input terminal of the frequency modulation circuit.

Optionally, the output circuit comprises: an eighth diode, a ninth diode and a sixth capacitor; and wherein
a first terminal of the eighth diode is connected to the LLC resonant half-bridge circuit, and a second terminal of the eighth diode is connected to a first terminal of the sixth capacitor;
a first terminal of the ninth diode is connected to the LLC resonant half-bridge circuit, and a second terminal of the ninth diode is connected to the first terminal of the sixth capacitor;
a second terminal of the sixth capacitor is connected to both the LLC resonant half-bridge circuit and the frequency modulation circuit.

Optionally, the control circuit comprises a control chip which comprises a first control terminal, a second control terminal, a third control terminal, a fourth control terminal, a power supply terminal and a grounding terminal;
wherein the first control terminal, the second control terminal, the third control terminal, the fourth control terminal, the power supply terminal and the grounding terminal are respectively connected to the LLC resonant half-bridge circuit.

Optionally, the electromagnetic interference filter circuit comprises: a fuse resistor, a common mode inductor, a differential mode inductor and a seventh capacitor; wherein
a first terminal of the fuse resistor is connected to the first AC input terminal, a second terminal of the fuse resistor is connected to a first terminal of the seventh capacitor;
a second terminal of the seventh capacitor is connected to the second AC input terminal;
a first input terminal of the common mode inductor is connected to the first terminal of the seventh capacitor, a second input terminal of the common mode inductor is connected to the second terminal of the seventh capacitor, a first output terminal of the common mode inductor is connected to the rectifier circuit, and a second output terminal of the common mode inductor is connected to a first terminal of the differential mode inductor;
a second terminal of the differential mode inductor is connected to the rectifier circuit.

Optionally, the AC input terminal comprises: the first AC input terminal and the second AC input terminal; the rectifier circuit comprises: the second diode, the third diode, the fourth diode and the fifth diode; the charging pump circuit comprises: the second capacitor, the third capacitor, the fourth capacitor and the sixth diode; the LLC resonant half-bridge circuit comprises: the second switch, the third switch, the first inductor, the second resistor, the third resistor, the fourth resistor, the fifth resistor, the sixth resistor, the seventh diode, the fifth capacitor and the transformer; the transformer comprises: the first primary winding, the first secondary winding corresponding to the first primary winding, the second primary winding and the second secondary winding corresponding to the second primary winding; the output circuit comprises: the eighth diode, the ninth diode and the sixth capacitor; the electromagnetic interference filter circuit comprises: the fuse resistor, the common mode inductor, the differential mode inductor and the seventh capacitor; the control circuit comprises the control chip that comprises the first control terminal, the second control terminal, the third control terminal, the fourth control terminal, the power supply terminal and the grounding terminal; wherein
the first terminal of the fuse resistor is connected to the first AC input terminal, the second terminal of the fuse resistor is connected to the first terminal of the seventh capacitor;
the second terminal of the seventh capacitor is connected to the second AC input terminal;
the first input terminal of the common mode inductor is connected to the first terminal of the seventh capacitor, the second input terminal of the common mode inductor is connected to the second terminal of the seventh capacitor, the first output terminal of the common mode inductor is connected to the first terminal of the second diode, and the second output terminal of the common mode inductor is connected to the first terminal of the differential mode inductor;
the second terminal of the differential mode inductor is connected to the first terminal of the third diode;
the second terminal of the second diode is connected to the second terminal of the third diode
the second terminal of the third diode is connected to the first terminal of the second capacitor;
the first terminal of the fourth diode is connected to the second terminal of the sixth diode, and the second terminal of the fourth diode is connected to the first terminal of the third diode;
the first terminal of the fifth diode is connected to the second terminal of the fourth capacitor, and the second terminal of the fifth diode is connected to the first terminal of the second diode;
the first terminal of the third capacitor is connected to the second terminal of the sixth diode, and the second terminal of the third capacitor is connected to the second terminal of the second capacitor
the first terminal of the fourth capacitor is connected to the first terminal of the fifth diode, and the second terminal of the fourth capacitor is grounded;
the first terminal of the sixth diode is connected to the second terminal of the second capacitor, and the second terminal of the sixth diode is connected to the first terminal of the fourth diode;
the first terminal of the second capacitor is connected to the second terminal of the third diode, and the second terminal of the second capacitor is connected to the first terminal of the sixth capacitor;
the control pole of the second switch is connected to the first control terminal, the first pole of the second switch is connected to the first terminal of the second capacitor, and the second pole of the second switch is connected to the first terminal of the first inductor;
the control pole of the third switch is connected to the second control terminal, the first pole of the third switch is connected to the first terminal of the first inductor, and the second pole of the third switch is connected to the second terminal of the second capacitor;
the second terminal of the first inductor is connected to the first input terminal of the first primary winding;
the second input terminal of the first primary winding is connected to the first terminal of the second resistor;
the first output terminal of the first secondary winding is connected to the first terminal of the eighth diode, the second output terminal of the first secondary winding is connected to the first terminal of the ninth diode, and the third output terminal of the first secondary winding is connected to the second terminal of the sixth capacitor;
the first terminal of the second resistor is connected to the third control terminal, and the second terminal of the second resistor is connected to the first terminal of the third resistor;
the first terminal of the third resistor is grounded, the second terminal of the third resistor is connected to the second pole of the third switch;
the first terminal of the fourth resistor is connected to the fourth control terminal, and the second terminal of the fourth resistor is connected to the first terminal of the sixth resistor;
the first terminal of the fifth resistor is connected to the first terminal of the fourth resistor, and the second terminal of the fifth resistor is connected to the grounding terminal;
the first terminal of the sixth resistor is connected to the second terminal of the seventh diode, and the second terminal of the sixth resistor is connected to the power supply terminal;
the first terminal of the fifth capacitor is connected to the second terminal of the sixth resistor, and the second terminal of the fifth capacitor is connected to the second terminal of the fifth resistor;
the first terminal of the seventh diode is connected to the first input terminal of the second primary winding;
the second input terminal of the second primary winding is connected to the second terminal of the fifth capacitor and is grounded as well; the first output terminal of the second secondary winding is connected to the first terminal of the first diode, and the second output terminal of the second secondary winding is connected to the second terminal of the first capacitor;
the first terminal of the eighth diode is connected to the first output terminal of the first secondary winding, the second terminal of the eighth diode is connected to the first terminal of the sixth capacitor;
the first terminal of the ninth diode is connected to the second output terminal of the first secondary winding, the second terminal of the ninth diode is connected to the second terminal of the eighth diode;
the first terminal of the sixth capacitor is connected to the second terminal of the ninth diode, and the second terminal of the sixth capacitor is connected to the third output terminal of the first secondary winding and the second terminal of the first capacitor;
the first terminal of the first diode is connected to the first output terminal of the second secondary winding, and the second terminal of the first diode is connected to the first terminal of the first resistor;
the second terminal of the first resistor is connected to the first terminal of the regulator;
the first terminal of the first capacitor is connected to the second terminal of the first resistor, and the second terminal of the first capacitor is connected to the second output terminal of the second secondary winding;
the first terminal of the regulator is connected to the first terminal of the first capacitor, the second terminal of the regulator is connected to the first terminal of the microprocessor, and the third terminal of the regulator is connected to the second output terminal of the second secondary winding;
the second terminal of the microprocessor is connected to the control pole of the first switch, the third terminal of the microprocessor is connected to the second output terminal of the second secondary winding;
the first pole of the first switch is connected to the output terminal, and the second pole of the first switch is connected to the second output terminal of the second secondary winding.

Optionally, the second switch and the third switch each comprise a triode.

According to still another aspect of the present disclosure, an illumination system is further provided, which comprises any of the above-mentioned drive circuits and an LED load; wherein an anode of the LED load is connected to the output circuit to receive the first current output from the output circuit, and an cathode of the LED load is connected to the frequency modulation circuit to receive the second current output from the frequency modulation circuit.

According to yet another aspect of the present disclosure, a control method of a drive circuit is provided for applying to any of the above-mentioned drive circuits, the control method comprises:
rectifying signals obtained from the AC input terminal by the rectifier circuit and outputting the rectified current, and converting the rectified current into the sinusoidal current for inputting into the LLC resonant half-bridge circuit through the charging pump circuit;
processing the sinusoidal current by the LLC resonant half-bridge circuit under the control of the control circuit so as to output the first signal and the second signal;
outputting the first current through the output circuit according to the first signal;
outputting the second current through the frequency modulation circuit under the control of the second signal;
wherein the first current is the constant current.

Optionally, outputting the second current through the frequency modulation circuit under the control of the second signal comprises:
converting the second signal into the DC signal through the rectification filter sub-circuit of the frequency modulation circuit;
converting the DC signal into the stable DC signal through the voltage stabilizing sub-circuit of the frequency modulation circuit;
generating the high-frequency driving signals through the control sub-circuit of the frequency modulation circuit under the control of the stable DC signal;
outputting the second current from the output terminal of the frequency modulation circuit under the control of the high frequency driving signals.

### Brief Description of the Drawings

The drawings are provided for facilitating further understanding of the technical solutions of the present disclosure and they form a part of the description. The drawings are only used in conjunction with the embodiments of the application for explaining the technical solutions of the present disclosure, but they do not intend to limit the technical solutions of the present disclosure.
Fig. 1 is a schematic structural diagram of a frequency modulation circuit provided in an embodiment of the present disclosure;
Fig. 2 is a circuit diagram of a frequency modulation circuit provided in an embodiment of the present disclosure;
Fig. 3 is a schematic structural diagram of a drive circuit provided in an embodiment of the present disclosure;
Fig. 4 is a schematic structural diagram of another drive circuit provided in an embodiment of the present disclosure;
Fig. 5 is a schematic structural diagram of another drive circuit provided in an embodiment of the present disclosure;
Fig. 6 is a schematic structural diagram of another drive circuit provided in an embodiment of the present disclosure;
Fig. 7 is a schematic structural diagram of another drive circuit provided in an embodiment of the present disclosure;
Fig. 8 is a schematic structural diagram of another drive circuit provided in an embodiment of the present disclosure;
Fig. 9 is a schematic structural diagram of another drive circuit provided in an embodiment of the present disclosure;
Fig. 10 is a schematic structural diagram of another drive circuit provided in an embodiment of the present disclosure;
Fig. 11 is a circuit diagram of a drive circuit provided in an embodiment of the present disclosure;
Fig. 12 is a flow chart of a control method for a drive circuit provided in an embodiment of the present disclosure.

### Detailed Description of Embodiments

In order to make the object, technical solution and advantages of the present disclosure clearer, embodiments of the present disclosure will be described in further detail below with reference to the drawings. It shall be noted that the embodiments in this application and features in the embodiments can be combined in any way as long as they do not conflict with one another.

Unless otherwise defined, the technical terms or scientific terms used in embodiments of the present disclosure shall be of general significance to those with common skills in the field to which the present disclosure belongs. Words like "first", "second", etc. used in embodiments of the present disclosure do not indicate any order, quantity or importance, but they are merely used for differentiating the components. Words like "comprise" or "include" do not mean to exclude other elements or objects. The expression like "connected to" does not mean to be limited to physical or mechanical connection, but it may include electrical connection, either direct or indirect.

It shall be noted that the power factor is a coefficient to measure the efficiency of electrical equipment. The low power factor indicates that the reactive power of the circuit for the conversion of an alternating magnetic field is high, which reduces the utilization rate of the equipment and increases the loss of power supply of the line, at the same time, the harmonic pollution at the input terminal is also serious.

Those skilled in the art can understand that the switches used in all embodiments of the present application can be transistors or field effect transistors or other devices having the same characteristics. In embodiments of the present disclosure, the control pole is a gate or a base, and in order to differentiate the other two poles than the gate or the base of the switch, one of the two poles is called the first pole and the other is called the second pole, wherein the first pole can be a source or a collector, and the second pole can be a drain or an emitter. In addition, in order to differentiate the two poles of the diode, one of them is called the first terminal and the other is called the second terminal, wherein the first terminal of the diode can be the positive pole of the diode, and the second terminal of the diode can be the negative pole of the diode.

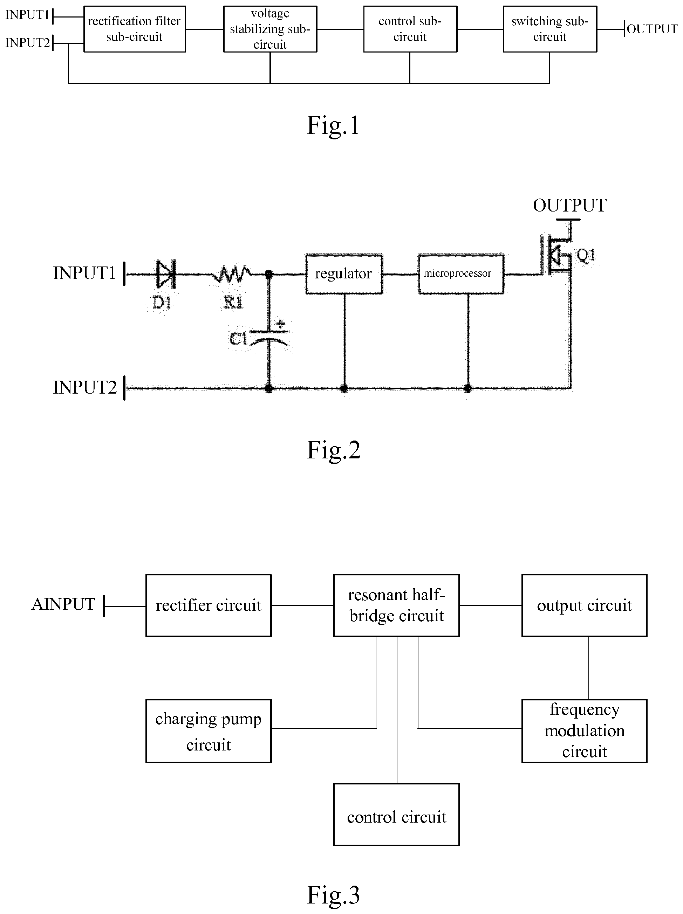

Fig. 1 is a schematic structural diagram of a frequency modulation circuit provided in an embodiment of the present disclosure. As shown in Fig. 1, the frequency modulation circuit provided in the embodiment of the present disclosure comprises: a rectification filter sub-circuit, a voltage stabilizing sub-circuit, a control sub-circuit and a switching sub-circuit.

In this embodiment, the rectification filter sub-circuit is connected to a first input terminal INPUT 1 of the frequency modulation circuit, a second input terminal INPUT2 of the frequency modulation circuit and the voltage stabilizing sub-circuit, and is configured to convert signals input at the first input terminal INPUT 1 into DC (Direct Current) signals.

The voltage stabilizing sub-circuit is connected to the second input terminal INPUT2 and the control sub-circuit, and is configured to convert the DC signals into stable DC signals.

As an example, the voltage stabilizing sub-circuit is configured to step-down the DC signals so as to convert them into stable DC signals. The stable DC signals generated by the voltage stabilizing sub-circuit provide the working voltage needed by the control sub-circuit.

The control sub-circuit is connected to the second input terminal INPUT2 and the switching sub-circuit, and is configured to generate high-frequency driving signals under the control of the stable DC signals.

Optionally, the control sub-circuit can be a microprocessor. Moreover, the high frequency driving signals can be driving signals with high frequencies, i.e. driving signals with short periods. The frequency of output of the microprocessor is adjustable, which can be determined according to parameters of the control sub-circuit.

The switching sub-circuit is connected to the second input terminal INPUT2 and an output terminal OUTPUT of the frequency modulation circuit, and is configured to output signals of the second input terminal INPUT2 under the control of the high frequency driving signals. Optionally, the second input terminal INPUT2 may be a reference voltage terminal. As an example, the reference voltage terminal can be a grounding terminal.

As an example, the output terminal OUTPUT of the frequency modulation circuit can be connected to a cathode of the LED load. The high frequency refers to a frequency at which a user cannot feel the flicker of the LED load. In embodiments of the present disclosure, the frequency of LED flickering can be changed by adjusting the frequencies of the high frequency driving signals output from the microprocessor.

It shall be noted that in optical communication, if the LED load flickers at different frequencies, the light signals emitted therefrom may carrier different information.

Optionally, signals input at the first input terminal INPUT 1 have a higher level than signals input at the second input terminal INPUT2.

It shall be noted that in this embodiment, an example is given in which the frequency modulation circuit outputs signals of the second input terminal when the high frequency driving signals have a high level. When the high frequency driving signals have a high level, the frequency modulation circuit outputs signals, and the LED load is in a light-emitting state. When the high frequency driving signals have a low level, the frequency modulation circuit does not output signals, so the LED load does not emit light. Since the frequency of the high frequency driving signal is high, the high frequency switching on and off of the LED load is usually not felt by human eyes. Therefore, the frequency modulation circuit provided in the embodiment of the present disclosure can enable the LED load to emit light signals. In addition, in combination with a dedicated APP on mobile phone terminals and a server, when a user opens the APP on the mobile phone and captures the light signals emitted by the LED load with the camera of the mobile phone, a special code of the LED load will be displayed on the APP and sent to the server. When the server receives the special code, it will sent information of a certain area or a certain collection of cultural relics corresponding to said special code back to the mobile phone of the user, which makes it easy for the user to watch the information he needs on his/her mobile phone, and even download the information, so that the user can easily watch the contents.

The frequency modulation circuit provided in the embodiment of the present disclosure can generate high frequency driving signals according to the input signals and control the output by the high frequency driving signals, so that the LED can send out light signals carrying content information, and the user can conveniently acquire content information by receiving the light signals.

Fig. 2 is a circuit diagram of a frequency modulation circuit provided in an embodiment of the present disclosure. Fig. 2 shows example structures of a rectification filter sub-circuit, a voltage stabilizing sub-circuit, a control sub-circuit and a switching sub-circuit. It is easy for those skilled in the art to understand that the implementation of the above sub-circuits is exemplary rather than restrictive.

Optionally, the rectification filter sub-circuit may comprise: a first diode D1, a first resistor R1 and a first capacitor C1; a first terminal of the first diode D1 is connected to the first input terminal INPUT 1 of the frequency modulation circuit, and a second terminal of the first diode D1 is connected to a first terminal of the first resistor R1; a second terminal of the first resistor R1 is connected to the voltage stabilizing sub-circuit; a first terminal of the first capacitor C1 is connected to the second terminal of the first resistor R1, and a second terminal of the first capacitor C1 is connected to the second input terminal INPUT2 of the frequency modulation circuit.

In an embodiment of the present disclosure, the first diode D1 rectifies the input signals, the first resistor R1 limits the current of the rectified signals, and the first capacitor C1 filters the current-limited signals so as to obtain DC signals.

Optionally, the voltage stabilizing sub-circuit comprises: a regulator; wherein a first terminal of the regulator is connected to the first terminal of the first capacitor C1, a second terminal of the regulator is connected to the control sub-circuit, and a third terminal of the regulator is connected to the second input terminal INPUT2.

Optionally, the regulator may comprise a low dropout regulator (LDO). As an example, the first terminal of the regulator can be the voltage input terminal of the regulator, the second terminal of the regulator can be the voltage output terminal of the regulator, and the third terminal of the regulator can be the reference voltage terminal of the regulator, which of course are not restrictive. Alternatively, the reference voltage terminal of the regulator can be the grounding terminal of the regulator.

Optionally, the control sub-circuit may comprises: a microprocessor; wherein a first terminal of the microprocessor is connected to the second terminal of the regulator, a second terminal of the microprocessor is connected to the switching sub-circuit, and a third terminal of the microprocessor is connected to the second input terminal INPUT2.

Optionally, the microprocessor may comprise a Microcontroller Unit (MCU), but this is not restrictive. As an example, the first terminal of the microprocessor may be a signal input terminal of the microprocessor, the second terminal of the microprocessor may be a signal output terminal of the microprocessor, and the third terminal of the microprocessor may be a reference voltage terminal of the microprocessor, which of course is not restrictive. Optionally, the reference voltage terminal of the microprocessor may be the grounding terminal of the microprocessor.

Optionally, the switching sub-circuit comprises: a first switch Q1; wherein a control pole of the first switch Q1 is connected to the second terminal of the microprocessor, a first pole of the first switch Q1 is connected to the output terminal OUTPUT; and a second pole of the first switch Q1 is connected to the second input terminal INPUT2.

Optionally, the first switch Q1 is an N-type or P-type metal oxide semiconductor field effect transistor, while the embodiments of the present disclosure do not specifically limit the type of the first switch.

The technical solutions of the embodiments of the present disclosure are further described below by means of the working process of the frequency modulation circuit.

In an embodiment of the present disclosure, an example is provided in which the first switch is an N-type metal oxide semiconductor field effect transistor. In the frequency modulation circuit provided in the embodiment of the present disclosure, signals are input at the first input terminal, the first diode rectifies the input signals, the first resistor limits the current of the rectified signals, the first capacitor filters the current-limited signal so as to generate DC signals, then the regulator converts the DC signals into stable DC signals. The stable DC signals supplies working voltage for the microprocessor, and the microprocessor generates high frequency driving signals under the control of the stable DC signals. When the high frequency driving signals have a high level, the first switch is turned on to enable the frequency modulation circuit to output signals of the second input terminal, and when the high frequency driving signals have a low level, the first switch is turned off such that the frequency modulation circuit has no output. Under the control of the high frequency driving signals, the first switch is turned on and off at high frequency. Because the output terminal of the frequency modulation circuit is connected to the cathode of the LED load, the LED load works in the state of high frequency on and off which the human eyes cannot perceive.

Based on the same inventive concept, an embodiment of the present disclosure further provides a drive circuit. Fig. 3 is a structural diagram of a drive circuit provided in an embodiment of the present disclosure. As shown in Fig. 3, the drive circuit provided in the embodiment of the present disclosure comprises a rectifier circuit, an LLC resonant half-bridge circuit, a control circuit, an output circuit, a charging pump circuit and a frequency modulation circuit. The frequency modulation circuit in this embodiment of the present disclosure can be the frequency modulation circuit provided in the above described embodiments.

In this embodiment, the rectifier circuit is connected to the AC (Alternating Current) input terminal AINPUT, the charging pump circuit and the LLC resonant half-bridge circuit, and is configured to rectify signals obtained from the AC input terminal to output rectified current. As an example, the AC input terminal is connected to the electric supply, and the inputted signals are AC signals.

The charging pump circuit is connected to the LLC resonant half-bridge circuit, and is configured to convert the rectified current into sinusoidal current so as to be input into the LLC resonant half-bridge circuit.

As an example, the charging pump circuit is configured to make the average current input into the LLC resonant half-bridge circuit to be the sinusoidal current that is in phase with the voltage output from the rectifier circuit (which is also in phase with the signals of the AC input terminal), such that the output power factor of the LED drive circuit can be raised up to 0.95-0.99.

The control circuit is connected to the LLC resonant half-bridge circuit and is configured to control operations (such as start or stop) of the LLC resonant half-bridge circuit.

As an example, in the embodiment of the present disclosure, the LLC resonant half-bridge circuit can be controlled by changing the signals output by the control circuit. It should be noted that the control circuit can also control the driving waveforms input into LLC resonant half-bridge circuit, control the stability of the loop between the control circuit and the LLC resonant half-bridge circuit, make the output current of the output circuit constant, etc., thereby realizing functions like protecting the circuits.

The LLC resonant half bridge circuit is connected to the output circuit and the frequency modulation circuit, and is configured to process the sinusoidal current under the control of the control circuit, and output the first signal and the second signal. Optionally, the first signal and the second signal are rectangular wave signals.

The output circuit is connected to the frequency modulation circuit and is configured to output a first current according to the first signal, in which the first current is a constant current. The output circuit can be connected to the anode of the LED load. The output circuit is connected to the frequency modulation circuit for the purpose of sharing the same grounding terminal with the frequency modulation circuit so as to form a loop.

The frequency modulation circuit is configured to output a second current under the control of the second signal. The frequency modulation circuit can be connected to the cathode of the LED load.

It shall be noted that the drive circuit provided in the embodiment of the present disclosure includes the frequency modulation circuits provided in the preceding embodiments, which can realize wireless optical communication when used in combination with a dedicated mobile phone APP and a back-end server.

The drive circuit provided in the embodiment of the present disclosure comprises: the rectifier circuit, the LLC resonant half-bridge circuit, the control circuit, the output circuit, the charging pump circuit and the frequency modulation circuit. The rectifier circuit is connected to the AC input terminal, the charging pump circuit and the LLC resonant half-bridge circuit, and is configured to rectify current signals obtained from the AC input terminal and output rectified current; the charging pump circuit is connected to the LLC resonant half-bridge circuit, and is configured to convert the rectified current into sinusoidal current so as to be input into the LLC resonant half-bridge circuit; the control circuit is connected to the LLC resonant half-bridge circuit and is configured to control operations of the LLC resonant half-bridge circuit; the LLC resonant half-bridge circuit is connected to the output circuit and the frequency modulation circuit, and is configured to process the sinusoidal current under the control of the control circuit to output a first signal and a second signal; the output circuit is connected to the frequency modulation circuit and is configured to output a first current according to the first signal; the frequency modulation circuit is configured to output a second current under the control of the second signal. The drive circuit provided in the embodiment of the present disclosure comprises the charging pump circuit and the frequency modulation circuit, which can not only increase the power factor of the drive circuit, but also realize wireless optical communication of the LED load and enable the LED to send light signals carrying content information. The user can conveniently acquire the content information by receiving the light signals.

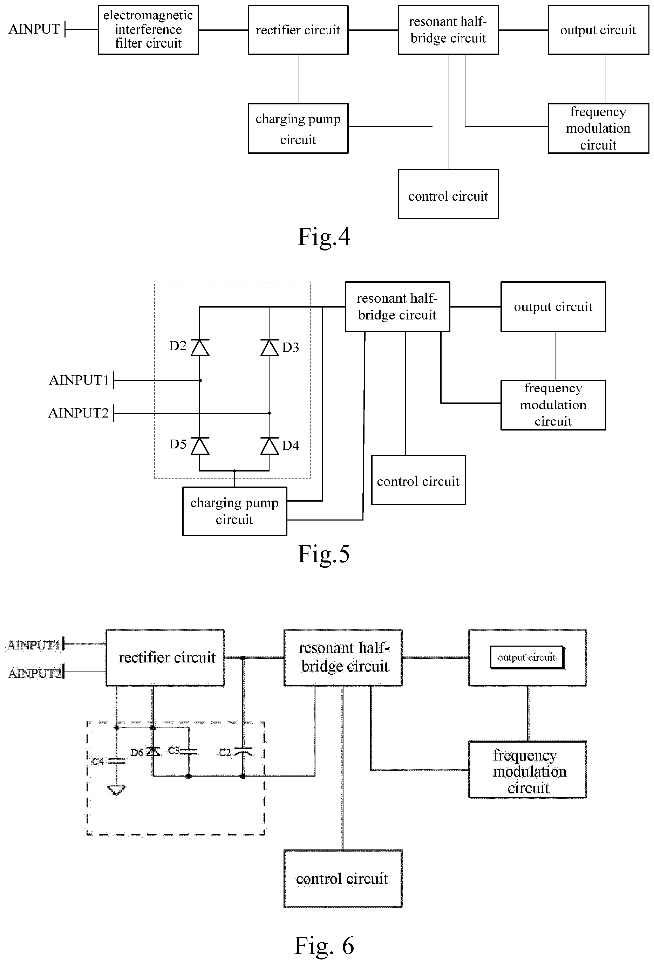

Fig. 4 is a structural diagram of another drive circuit provided in an embodiment of the present disclosure. As shown in Fig. 4, the drive circuit provided in the embodiment of the present disclosure further comprises an electromagnetic interference filter circuit in addition to the circuit as shown in Fig. 3.

The rectifier circuit is connected to the AC input terminal through the electromagnetic interference filter circuit, and the electromagnetic interference filter circuit is configured to restrain electromagnetic interferences in signals of the AC input terminal.

In this embodiment, by arranging the electromagnetic interference filter circuit in the drive circuit, the electromagnetic interference (EMI) of the drive circuit can be effectively restrained, so that the drive circuit meets the requirement of limitations to radio disturbance characteristics of electrical lighting and similar devices of GB17743.

Fig. 5 is a structural diagram of another drive circuit provided in an embodiment of the present disclosure. As shown in the dotted frame in Fig. 5, the rectifier circuit in the drive circuit includes a second diode D2, a third diode D3, a fourth diode D4 and a fifth diode D5. It should be noted that other circuits included in said drive circuit shown in Fig. 5 are the same as those depicted in Fig. 3.

As shown in Fig. 5, the AC input terminal comprises: a first AC input terminal AINPUT1 and a second AC input terminal AINPUT2. The second AC input terminal AINPUT2 can, for example, be the reference voltage terminal or the grounding terminal.

A first terminal of the second diode D2 is connected to the first AC input terminal AINPUT1, a second terminal of the second diode D2 is connected to a second terminal of the third diode D3; a first terminal of the third diode D3 is connected to the second AC input terminal AINPUT2, and a second terminal of the third diode D3 is connected to the charging pump circuit and the LLC resonant half-bridge circuit; a first terminal of the fourth diode D4 is connected to the charging pump circuit, and a second terminal of the fourth diode D4 is connected to the second AC input terminal AINPUT2; a first terminal of the fifth diode D5 is connected to the charging pump circuit, and a second terminal of the fifth diode D5 is connected to the first AC input terminal AINPUT1.

Optionally, the second diode D2, third diode D3, fourth diode D4 and fifth diode D5 are fast recovery diodes.

It shall be noted that Fig. 5 illustrates an exemplary structure of the rectifier circuit, but it is easy for those skilled in the art to understand that the implementation of the circuit is not limited to this, and that any implementation method capable of realizing its functions is contemplated.

Fig. 6 is a schematic structural diagram of another drive circuit provided in an embodiment of the present disclosure. As shown in the dotted frame in Fig. 6, the charging pump circuit in the drive circuit includes a second capacitor, a third capacitor C3, a fourth capacitor C4 and a sixth diode D6. It shall be pointed out that other circuits included in said drive circuit shown in Fig. 6 are the same as those depicted in Fig. 3.

A first terminal of the second capacitor C2 is connected to the rectifier circuit and the LLC resonant half-bridge circuit, and a second terminal of the second capacitor C2 is connected to a second terminal of the third capacitor C3.

A first terminal of the third capacitor C3 is connected to a second terminal of the sixth diode D6, and a second terminal of the third capacitor C3 is connected to the LLC resonant half-bridge circuit; a first terminal of the fourth capacitor C4 is connected to the rectifier circuit and a second terminal of the fourth capacitor C4 is grounded; a first terminal of the sixth diode D6 is connected to the second terminal of the third capacitor C3, and a second terminal of the sixth diode D6 is connected to a first terminal of the fourth capacitor C4.

Optionally, the sixth diode D6 is a fast recovery diode.

Optionally, the third capacitor C3 and the fourth capacitor C4 are both metal film capacitors.

Optionally, the second capacitor C2 is an electrolytic capacitor.

In this embodiment, by taking advantage of the time-sharing charging and discharging characteristics of the third capacitor C3 and the fourth capacitor C4, the rectified current output from the rectifier circuit can be transferred to the electrolytic capacitor C2, so that the average current input into the LLC resonant half-bridge circuit is the sinusoidal current in phase with the voltage output from the rectifier circuit, thereby increasing the output power factor of the LED drive circuit up to 0.95-0.99.

The charging pump circuit in the LED drive circuit provided in the embodiment of the present disclosure comprises three capacitors and one diode, so it needs fewer electronic devices and is simple compared with the existing charging circuits, thereby saving the manufacturing cost while guaranteeing a high power factor, improving the utilization rate of the power grid and reducing harmonic pollution.

It shall be noted that Fig. 6 shows an example structure of the charging pump circuit, but it is easy for those skilled in the art to understand that the implementation of the circuit is not limited to this, and that any implementation method capable of realizing its functions is envisaged.

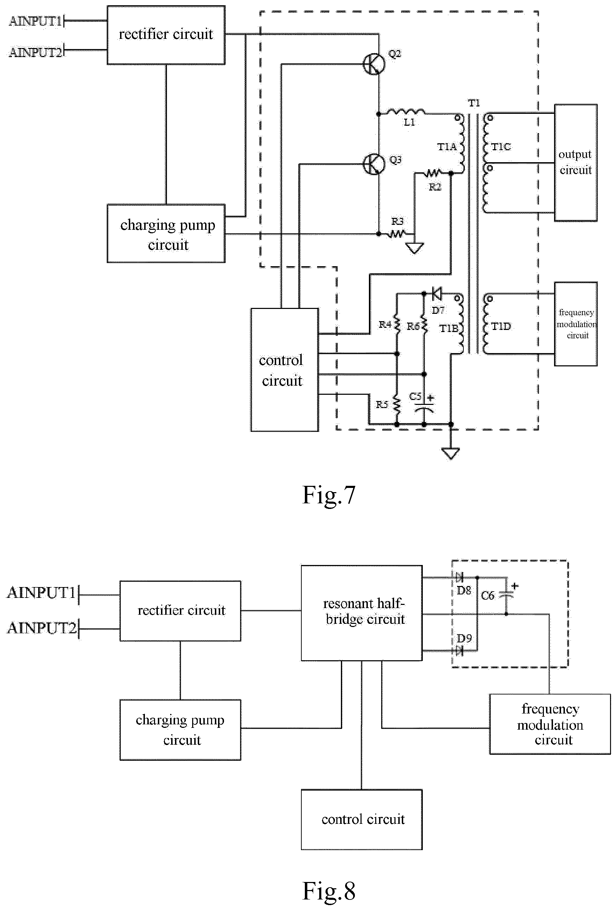

Fig. 7 is a schematic structural diagram of another drive circuit provided in an embodiment of the present disclosure. As shown in the dotted frame in Fig. 7, the LLC resonant half-bridge circuit in the drive circuit comprises: a second switch Q2, a third switch Q3, a first inductor L1, a second resistor R2, a third resistor R3, a fourth resistor R4, a fifth resistor R5, a sixth resistor R6, a seventh diode D7, a fifth capacitor C5 and a transformer, wherein the transformer comprises: a first primary winding T1A, a first secondary winding TIC corresponding to the first primary winding, a second primary winding T1B and a second secondary winding T1D corresponding to the second primary winding. It shall be pointed out that other circuits included in said drive circuit shown in Fig. 7 are the same as those depicted in Fig. 3.

As shown in Fig. 7, a control pole of the second switch Q2 is connected to the control circuit, a first pole of the second switch Q2 is connected to the charging pump circuit and the rectifier circuit, and a second pole of the second switch Q2 is connected to a first terminal of the first inductor L1; a control pole of the third switch Q3 is connected to the control circuit, a first pole of the third switch Q3 is connected to the first terminal of the first inductor L1, and a second pole of the third switch Q3 is connected to the charging pump circuit; a second terminal of the first inductor L1 is connected to a first input terminal of the first primary winding T1A; a second input terminal of the first primary winding T1A is connected to a first terminal of the second resistor R2; and the first secondary winding TIC is connected to the output circuit; the first terminal of the second resistor R2 is connected to the control circuit, and a second terminal of the second resistor R2 is connected to a first terminal of the third resistor R3; the first terminal of the third resistor R3 is grounded, a second terminal of the third resistor R3 is connected to a second pole of the third switch Q3; a first terminal of the fourth resistor R4 is connected to the control circuit, and a second terminal of the fourth resistor R4 is connected to a first terminal of the sixth resistor R6; a first terminal of the fifth resistor R5 is connected to the first terminal of the fourth resistor R4, and a second terminal of the fifth resistor R5 is connected to the control circuit; a first terminal of the sixth resistor R6 is connected to a second terminal of the seventh diode D7, and a second terminal of the sixth resistor R6 is connected to the control circuit; a first terminal of the fifth capacitor C5 is connected to the second terminal of the sixth resistor R6, and a second terminal of the fifth capacitor C5 is connected to the second terminal of the fifth resistor R5; a first terminal of the seventh diode D7 is connected to a first input terminal of the second primary winding TIB; a second input terminal of the second primary winding T1B is connected to the second terminal of the fifth capacitor C5 and is grounded as well; a first output terminal of the second secondary winding T1D is connected to the first input terminal of the frequency modulation circuit, and a second output terminal of the second secondary winding T1D is connected to the second input terminal of the frequency modulation circuit.

In this embodiment, the first primary winding T1A, the first secondary winding TIC corresponding to the first primary winding, the second primary winding T1B and the second secondary winding T1D corresponding to the second primary winding may share one iron core T1 so as to simplify the structure of the drive circuit.

Optionally, the second switch Q2 and the third switch Q3 can be triodes.

The embodiments of the present disclosure use triodes as the switches of the LLC resonant half-bridge circuit, so the cost of the drive circuit can be reduced.

Optionally, the seventh diode D7 is a rectifier diode.

Optionally, the first inductor L1 is a resonant inductor.

Optionally, the fifth capacitor C5 is an electrolytic capacitor.

It shall be noted that the LLC resonant half-bridge circuit provided in the embodiments of the present disclosure adopts the resonant circuit LLC topology structure, so that the drive circuit provided in the embodiments of the present disclosure is a single-stage high power factor circuit with a high conversion rate that can easily reach over 90%. In addition, the LLC resonant half-bridge circuit provided in the embodiments of the present disclosure can also be implemented by a single-stage active power factor correction (APFC) or a valley filling circuit in addition to the above-mentioned ways of implementation, but it needs to be pointed out that the efficiency of the single-stage APFC circuit can hardly reach 90% and is not suitable for drive circuits of 40-80W. The valley filling circuit can raise the power factor to 0.9, but it has low efficiency and significant harmonics and is unsuitable for drive circuits over 30W. The LLC resonant half-bridge circuit provided in the embodiments of the present disclosure is quite suitable for being used in LED drive circuits of 30-80W.

The LLC resonant half-bridge circuit provided in the embodiment of the present disclosure can make the second switch and the third switch operate in the zero-voltage switching state under the control of the control circuit, thereby reducing the loss of the switch and achieving a higher conversion rate.

It shall be noted that Fig. 7 illustrates an exemplary structure of the LLC resonant half-bridge circuit, but it is easy for those skilled in the art to understand that the implementation of the circuit is not limited to this, and that any implementation method capable of realizing its functions is contemplated.

Fig. 8 is a schematic structural diagram of another drive circuit provided in an embodiment of the present disclosure. As shown in the dotted frame in Fig. 8, the output circuit in the drive circuit includes an eighth diode D8, a ninth diode D9 and a sixth capacitor C6. It should be noted that other circuits included in said drive circuit shown in Fig. 8 are the same as those depicted in Fig. 3.

A first terminal of the eighth diode D8 is connected to the LLC resonant half-bridge circuit, and a second terminal of the eighth diode D8 is connected to a first terminal of the sixth capacitor C6; a first terminal of the ninth diode D9 is connected to the LLC resonant half-bridge circuit, and a second terminal of the ninth diode D9 is connected to the first terminal of the sixth capacitor C6; a second terminal of the sixth capacitor C6 is connected to both the LLC resonant half-bridge circuit and the frequency modulation circuit.

Optionally, the eighth diode D8 and the ninth diode D9 are Schottky diodes.

Optionally, the sixth capacitor C6 is an electrolytic capacitor.

As an example, the first signal input at the output circuit is rectified by the eighth diode D8 and the ninth diode D9 and is filtered by the sixth capacitor C6, thereby generating a constant current.

It shall be noted that Fig. 8 shows an example structure of the output circuit, but it is easy for those skilled in the art to understand that the implementation of the circuit is not limited to this, and that any implementation method capable of realizing its functions is envisaged.

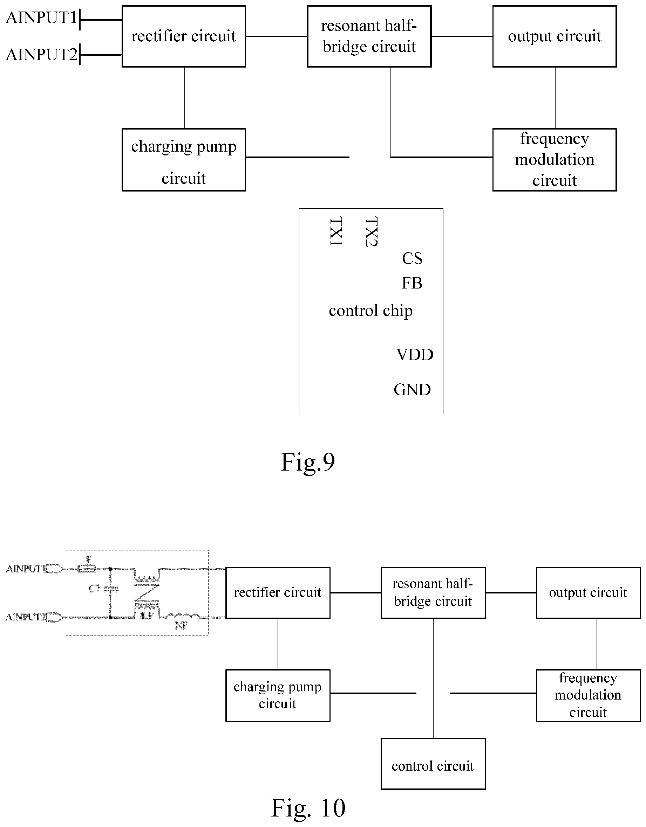

Fig. 9 is a schematic structural diagram of another drive circuit provided in an embodiment of the present disclosure. As shown in Fig. 9, the control circuit in said drive circuit comprises a control chip that includes a first control terminal TX1, a second control terminal TX2, a third control terminal CS, a fourth control terminal FB, a power supply terminal VDD and a grounding terminal GND. As an example, the first control terminal TX1 and second control terminal TX2 can be signal output terminals of the control chip for outputting driving signals that control the LLC resonant half-bridge circuit, the third control terminal CS can be a current detection terminal, and the fourth control terminal FB can be a voltage feedback terminal. As an example, the control chip can, for example, be the RED2511 chip produced by Redisem. It should be noted that other circuits included in said drive circuit shown in Fig. 9 are the same as those depicted in Fig. 3.

The first control terminal TX1, the second control terminal TX2, the third control terminal CS, the fourth control terminal FB, the power supply terminal VDD and the grounding terminal GND are respectively connected to the LLC resonant half-bridge circuit.

It shall be noted that Fig. 9 shows an example structure of the control circuit, but it is easy for those skilled in the art to understand that the implementation of the circuit is not limited to this, and that any implementation method capable of realizing its functions is envisaged.

In addition, the drive circuit may further includes a drive sub-circuit (not shown in the figure), which is connected to both the control chip included in the control circuit and the LLC resonant half-bridge circuit for amplifying the driving signals output from the control chip. The drive sub-circuit can, for example, be a transformer. The control chip may be as shown in Fig. 9. As an example, the drive sub-circuit can be connected to the first control terminal TX1 and the second control terminal TX2 of the control chip and to the second switch Q2 and third switch Q3 in the LLC resonant half-bridge circuit, and be configured to amplify the driving signals output from the signal output terminal of the control chip.

Fig. 10 is a schematic structural diagram of another drive circuit provided in an embodiment of the present disclosure. The drive circuit includes an electromagnetic interference filter circuit, as shown by the dotted frame in Fig. 10, and the electromagnetic interference filter circuit comprises: a fuse resistor F, a common mode inductor LF, a differential mode inductor NF and a seventh capacitor C7. It shall be noted that other circuits included in said drive circuit shown in Fig. 10 are the same as those depicted in Fig. 3.

A first terminal of the fuse resistor F is connected to the first AC input terminal AINPUT1, a second terminal of the fuse resistor F is connected to a first terminal of the seventh capacitor C7; a second terminal of the seventh capacitor C7 is connected to the second AC input terminal AINPUT2; a first input terminal of the common mode inductor LF is connected to the first terminal of the seventh capacitor C7, a second input terminal of the common mode inductor LF is connected to the second terminal of the seventh capacitor C7, a first output terminal of the common mode inductor LF is connected to the rectifier circuit, and a second output terminal of the common mode inductor LF is connected to a first terminal of the differential mode inductor NF; a second terminal of the differential mode inductor NF is connected to the rectifier circuit.

Optionally, the fuse resistor F may be a fuse.

Optionally, the seventh capacitor C7 may be a safety capacitor.

It shall be noted that Fig. 10 shows an example structure of the electromagnetic interference filter circuit, but it is easy for those skilled in the art to understand that the implementation of the circuit is not limited to this, and that any implementation method capable of realizing its functions is envisaged.

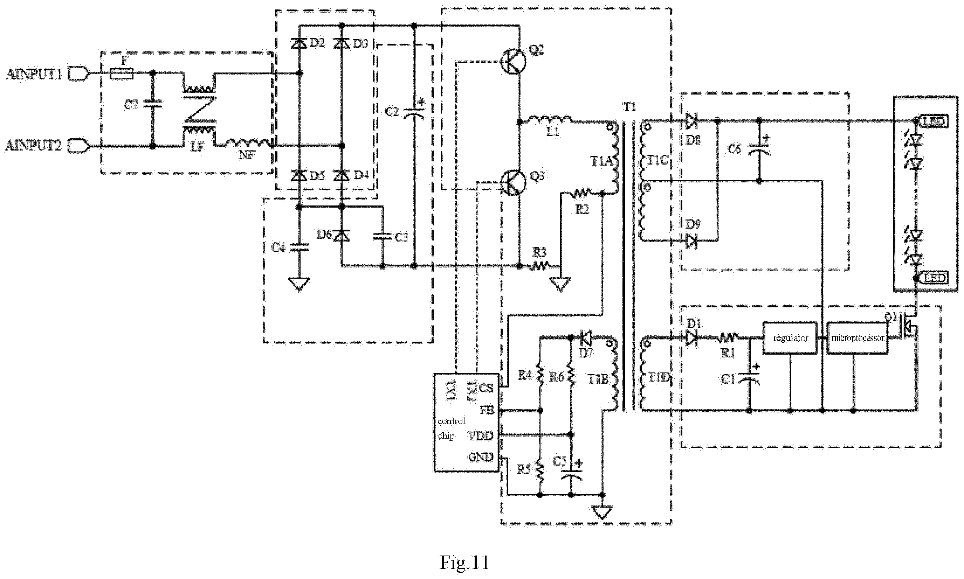

Fig. 11 is a circuit diagram of a drive circuit provided in an embodiment of the present disclosure. As shown in Fig. 11, the drive circuit provided in the embodiment of the present disclosure comprises: an electromagnetic interference filter circuit, a rectifier circuit, a LLC resonant half-bridge circuit, a control circuit, an output circuit, a charging pump circuit and a frequency modulation circuit. The frequency modulation circuit comprises: the first diode D1, the first resistor R1, the first capacitor C1, the regulator, the microprocessor and the first switch Q1; the rectifier circuit comprises: the second diode D2, the third diode D3, the fourth diode D4 and the fifth diode D5; the charging pump circuit comprises: the second capacitor C2, the third capacitor C3, the fourth capacitor C4 and the sixth diode D6; the LLC resonant half-bridge circuit comprises: the second switch Q2, the third switch Q3, the first inductor L1, the second resistor R2, the third resistor R3, the fourth resistor R4, the fifth resistor R5, the sixth resistor R6, the seventh diode D7, the fifth capacitor C5 and the transformer; the output circuit comprises: the eighth diode D8, the ninth diode D9 and the sixth capacitor C6; the electromagnetic interference filter circuit comprises: the fuse resistor F, the common mode inductor LF, the differential mode inductor NF and the seventh capacitor C7; the control circuit comprises the control chip that includes the first control terminal TX1, the second control terminal TX2, the third control terminal CS, the fourth control terminal FB, the power supply terminal VDD and the grounding terminal GND.

The AC input terminal of the rectifier circuit comprises: the first AC input terminal AINPUT1 and the second AC input terminal AINPUT2; the transformer comprises: the first primary winding T1A, the first secondary winding TIC corresponding to the first primary winding T1A, the second primary winding T1B and the second secondary winding T1D corresponding to the second primary winding T1B.

In this embodiment, the first terminal of the fuse resistor F is connected to the first AC input terminal AINPUT1, the second terminal of the fuse resistor F is connected to the first terminal of the seventh capacitor C7; the second terminal of the seventh capacitor C7 is connected to the second AC input terminal AINPUT2; the first input terminal of the common mode inductor LF is connected to the first terminal of the seventh capacitor C7, the second input terminal of the common mode inductor LF is connected to the second terminal of the seventh capacitor C7, the first output terminal of the common mode inductor LF is connected to the first terminal of the second diode D2, and the second output terminal of the common mode inductor LF is connected to the first terminal of the differential mode inductor NF; the second terminal of the differential mode inductor NF is connected to the first terminal of the third diode D3; the second terminal of the second diode D2 is connected to the second terminal of the third diode D3; the second terminal of the third diode D3 is connected to the first terminal of the second capacitor C2; the first terminal of the fourth diode D4 is connected to the second terminal of the sixth diode D6, the second terminal of the fourth diode D4 is connected to the first terminal of the third diode D3, the first terminal of the fifth diode D5 is connected to the second terminal of the fourth capacitor C4, the second terminal of the fifth diode D5 is connected to the first terminal of the second diode D2; the first terminal of the third capacitor C3 is connected to the second terminal of the sixth diode D6, and the second terminal of the third capacitor C3 is connected to the second terminal of the second capacitor C2; the first terminal of the fourth capacitor C4 is connected to the first terminal of the fifth diode D5, and the second terminal of the fourth capacitor C4 is grounded; the first terminal of the sixth diode D6 is connected to the second terminal of the second capacitor C2, the second terminal of the sixth diode D6 is connected to the first terminal of the fourth diode D4; the first terminal of the second capacitor C2 is connected to the second terminal of the third diode D3, and the second terminal of the second capacitor C2 is connected to the first terminal of the sixth diode; the control pole of the second switch Q2 is connected to the first control terminal TX1; the first pole of the second switch Q2 is connected to the first terminal of the second capacitor C2, the second pole of the second switch Q2 is connected to the first terminal of the first inductor L1; the control pole of the third switch Q3 is connected to the second control terminal TX2, the first pole of the third switch Q3 is connected to the first terminal of the first inductor L1, the second pole of the third switch Q3 is connected to the second terminal of the second capacitor C2; the second terminal of the first inductor L1 is connected to the first input terminal of the first primary winding T1A; the second input terminal of the first primary winding T1A is connected to the first terminal of the second resistor R2; the first output terminal of the first secondary winding TIC is connected to the first terminal of the eighth diode D8, the second output terminal of the first secondary winding TIC is connected to the first terminal of the ninth diode D9, and the third output terminal of the first secondary winding TIC is connected to the second terminal of the sixth capacitor C6; the first terminal of the second resistor R2 is connected to the third control terminal CS, the second terminal of the second resistor R2 is connected to the first terminal of the third resistor R3; the first terminal of the third resistor R3 is grounded, and the second terminal of the third resistor R3 is connected to the second pole of the third switch Q3; the first terminal of the fourth resistor R4 is connected to the fourth control terminal FB, the second terminal of the fourth resistor R4 is connected to the first terminal of the sixth resistor R6; the first terminal of the fifth resistor R5 is connected to the first terminal of the fourth resistor R4, the second terminal of the fifth resistor R5 is connected to the grounding terminal GND; the first terminal of the sixth resistor R6 is connected to the second terminal of the seventh diode D7, the second terminal of the sixth resistor R6 is connected to the power supply terminal VDD; the first terminal of the fifth capacitor C5 is connected to the second terminal of the sixth resistor R6, the second terminal of the fifth capacitor C5 is connected to the second terminal of the fifth resistor R5; the first terminal of the seventh diode is connected to the first input terminal of the second primary winding T1B, the second input terminal of the second primary winding T1B is connected to the second terminal of the fifth capacitor C5 and is grounded, the first output terminal of the second secondary winding T1D is connected to the first terminal of the first diode D1, the second output terminal of the second secondary winding T1D is connected to the second terminal of the first capacitor C1; the first terminal of the eighth diode D8 is connected to the first output terminal of the first secondary winding TIC, the second terminal of the eighth diode D8 is connected to the first terminal of the sixth capacitor C6; the first terminal of the ninth diode D9 is connected to the second output terminal of the first secondary winding TIC, the second terminal of the ninth diode D9 is connected to the second terminal of the eighth diode D8; the first terminal of the sixth capacitor C6 is connected to the second terminal of the ninth diode D9, the second terminal of the sixth capacitor C6 is connected to the third output terminal of the first secondary winding TIC and the second terminal of the first capacitor C1; the first terminal of the first diode D1 is connected to the first output terminal of the second secondary winding TID, the second terminal of the first diode D1 is connected to the first terminal of the first resistor R1; the second terminal of the first resistor R1 is connected to the first terminal of the regulator; the first terminal of the first capacitor C1 is connected to the second terminal of the first resistor R1, the second terminal of the first capacitor C1 is connected to the second input terminal of the second secondary winding T1D; the first terminal of the regulator is connected to the first terminal of the first capacitor C1, the second terminal of the regulator is connected to the first terminal of the microprocessor, and the third terminal of the regulator is connected to the second output terminal of the second secondary winding; the second terminal of the microprocessor is connected to the control pole of the first switch Q1; the third terminal of the microprocessor is connected to the second output terminal of the second secondary winding; the first pole of the first switch Q1 is connected to the output terminal, and the second pole of the first switch Q1 is connected to the second output terminal of the second secondary winding.

As an example, the first secondary winding may be consisting of a first coil and a second coil, wherein one end of the first coil is connected to one end of the second coil to form the third output terminal of the first secondary winding. The third output terminal may be, for example, a reference voltage terminal. The other end of the first coil constitutes the first output terminal of the first secondary winding, and the other end of the second coil constitutes the second output terminal of the first secondary winding.

The third control terminal CS and the fourth control terminal FB of the control chip are electrically connected to the output terminal of the LLC resonant half-bridge circuit, respectively. Wherein the fourth control terminal FB is used to detect the voltage output from the LLC resonant half-bridge circuit, and the third control terminal CS is used to detect the current output from the LLC resonant half-bridge circuit. According to the output voltage and current of the LLC resonant half-bridge circuit obtained by the third control terminal CS and the fourth control terminal FB, the control chip controls the start or stop of operation of the LLC resonant half-bridge circuit through the first control terminal TX1 and the second control terminal TX2.

Based on the same inventive concept, an embodiment of the present disclosure further provides an illumination system. The illumination system provided in the embodiment of the present disclosure includes the drive circuit mentioned above and further includes an LED load, whose anode is connected to the output circuit to receive the first current output from the output circuit, and whose cathode is connected to the frequency modulation circuit to receive the second current output from the frequency modulation circuit. As an example, as shown in Fig. 11, the anode of the LED load is connected to the first terminal of the sixth capacitor, and the cathode of the LED load is connected to the first pole of the first switch.

The technical solution provided in the embodiment of the present disclosure will be further described below by describing the working process of the drive circuit.

A signal with an AC voltage of 220 V is input into the AC input terminal. After the electromagnetic interference filter circuit has restrained the electromagnetic interference in the signal input into the AC input terminal, the four diodes in the rectifier circuit will rectify the signal whose electromagnetic interference has been restrained to output the rectified signal. The charging pump circuit uses the time-sharing charging and discharging characteristics of the third capacitor C3 and the fourth capacitor C4 to transfer the electric energy of the rectified signal output from the rectifier circuit to the second capacitor C2 that is capable of high-voltage energy storage, so that the average current input into the LLC resonant half-bridge circuit is the sinusoidal current; the output voltage and current of the LLC resonant half-bridge circuit are obtained by the third control terminal CS and the fourth control terminal FB in the control chip, and the LLC resonant half-bridge circuit is controlled through the first control terminal TX1 and the second control terminal TX2, so that the LLC resonant half-bridge circuit outputs the first signal and the second signal; the first signal is rectified by the eighth diode D8 and the ninth diode D9 and is filtered by the sixth capacitor C6 so as to generate the constant current which supplies continuous constant current for the LED load to emit light; the first diode rectifies the second signal, the first resistor limits the current of the rectified signal, and the first capacitor filters the current-limited signal to generate the DC signal; the regulator stabilizes the DC signal to convert the DC signal into the stable DC signal serving as the working voltage of the processor; the microprocessor generates the high frequency driving signals under the control of the stable DC signal, and the first switch is turned on and off at high frequency under the control of the high frequency driving signals, so that the LED load is in a state of high frequency on and off to emit light signals which carry content information, and the user can receive the light signals to conveniently obtain the content information.

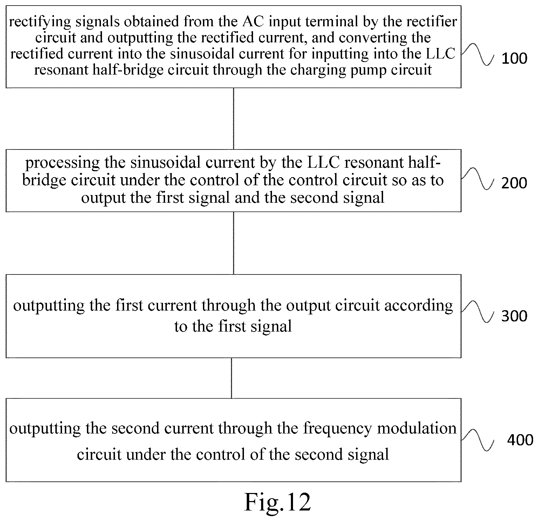

Based on the same inventive concept, an embodiment of the present disclosure further provides a control method for the drive circuit, which can be applied to the drive circuit provided in the above embodiments. Fig. 12 is a flow chart of a control method for the drive circuit provided in an embodiment of the present disclosure. As shown in Fig. 12, the control method for the drive circuit provided in the embodiment of the present disclosure includes the following steps 100-400.

At step 100, signals obtained from the AC input terminal are rectified by the rectifier circuit and the rectified current is output, and the rectified current is converted into the sinusoidal current for input into the LLC resonant half-bridge circuit by means of the charging pump circuit.

As an example, the electric energy of the AC input terminal is the electric supply and is the AC signal.

As an example, the sinusoidal current is in phase with the voltage output from the rectifier circuit.

At step 200, under the control of the control circuit, the sinusoidal current is processed through the LLC resonant half bridge circuit to output the first signal and the second signal. As an example, both the first signal and the second signal are rectangular wave signals.

At step 300, the first current is output through the output circuit according to the first signal; and at step 400, the second current is output through the frequency modulated circuit under the control of the second signal.

In this embodiment, the first current can be the constant current, which provides a constant working current for the LED load. The frequency modulation circuit is connected to the cathode of the LED load, and converts the constant working current flowing through the LED load into rectangular wave current.

In this embodiment, outputting the second current through the frequency modulation circuit under the control of the second signal includes: converting the second signal into a DC signal through the rectification filter sub-circuit of the frequency modulation circuit; converting the DC signal into a stable DC signal through the voltage stabilizing sub-circuit of the frequency modulation circuit; and under the control of the stable DC signal, generating high frequency driving signals through the control sub-circuit of the frequency modulation circuit; and under the control of the high frequency driving signals, outputting a second current from the output terminal of the frequency modulation circuit.

In the embodiments of the present disclosure, the charging pump circuit makes the average current input into the LLC resonant half-bridge circuit to be the sinusoidal current, and the frequency modulation circuit enables the LED load to be turned on and off at high frequency, which not only increases the power factor of the drive circuit, but also realizes the wireless optical communication of the LED load. The LED sends out an light signals carrying content information, and users can receive the light signals to obtain content information conveniently.

Although the present disclosure provides embodiments as described above, the embodiments are provided only to facilitate understanding of the present disclosure, not to limit the present disclosure. Any skilled person in the field to which this disclosure belongs may make any modifications and changes in the form and details of the embodiments without departing from the spirit and scope disclosed in this disclosure. The scope of patent protection of the present disclosure shall be subject to the scope defined in the appended claims.

## Claims

1. A frequency modulation circuit, comprising: a rectification filter sub-circuit, a voltage stabilizing sub-circuit, a control sub-circuit and a switching sub-circuit; wherein
the rectification filter sub-circuit is connected to a first input terminal of the frequency modulation circuit, a second input terminal of the frequency modulation circuit and the voltage stabilizing sub-circuit, and is configured to convert signals input through the first input terminal into DC signals;
the voltage stabilizing sub-circuit is connected to the second input terminal and the control sub-circuit, and is configured to convert the DC signals into stable DC signals;
the control sub-circuit is connected to the second input terminal and the switching sub-circuit, and is configured to generate high-frequency driving signals under the control of the stable DC signals;
the switching sub-circuit is connected to the second input terminal and an output terminal of the frequency modulation circuit, and is configured to output signals of the second input terminal from the output terminal under the control of the high frequency driving signals.

2. The frequency modulation circuit according to claim 1, wherein the rectification filter sub-circuit comprises: a first diode, a first resistor and a first capacitor; and wherein
a first terminal of the first diode is connected to the first input terminal, and a second terminal of the first diode is connected to a first terminal of the first resistor;
a second terminal of the first resistor is connected to the voltage stabilizing sub-circuit;
a first terminal of the first capacitor is connected to the second terminal of the first resistor, and a second terminal of the first capacitor is connected to the second input terminal.

3. The frequency modulation circuit according to claim 2, wherein the voltage stabilizing sub-circuit comprises: a regulator; and wherein
a first terminal of the regulator is connected to the first terminal of the first capacitor, a second terminal of the regulator is connected to the control sub-circuit, and a third terminal of the regulator is connected to the second input terminal.

4. The frequency modulation circuit according to claim 3, wherein the control sub-circuit comprises: a microprocessor; and wherein
a first terminal of the microprocessor is connected to the second terminal of the regulator, a second terminal of the microprocessor is connected to the switching sub-circuit, and a third terminal of the microprocessor is connected to the second input terminal.

5. The frequency modulation circuit according to claim 4, wherein the switching sub-circuit comprises: a first switch; and wherein
a control pole of the first switch is connected to the second terminal of the microprocessor, a first pole of the first switch is connected to the output terminal, and a second pole of the first switch is connected to the second input terminal.

6. A drive circuit comprising: a rectifier circuit, a LLC resonant half-bridge circuit, a control circuit, an output circuit, a charging pump circuit and the frequency modulation circuit according to any one of claims 1-5; wherein
the rectifier circuit is connected to an AC input terminal, the charging pump circuit and the LLC resonant half-bridge circuit, and is configured to rectify signals obtained from the AC input terminal and output rectified current;
the charging pump circuit is connected to the LLC resonant half-bridge circuit, and is configured to convert the rectified current into sinusoidal current for inputting into the LLC resonant half-bridge circuit;
the control circuit is connected to the LLC resonant half-bridge circuit and is configured to control operations of the LLC resonant half-bridge circuit;
the LLC resonant half-bridge circuit is connected to the output circuit and the frequency modulation circuit, and is configured to process the sinusoidal current to output a first signal and a second signal;
the output circuit is connected to the frequency modulation circuit and is configured to output a first current according to the first signal, the first current being a constant current;
the frequency modulation circuit is configured to output a second current under the control of the second signal.

7. The drive circuit according to claim 6, wherein the drive circuit further comprises an electromagnetic interference filter circuit; wherein
the rectifier circuit is connected to the AC input terminal through the electromagnetic interference filter circuit, and the electromagnetic interference filter circuit is configured to restrain electromagnetic interferences in signals of the AC input terminal.

8. The drive circuit according to claim 6, wherein the AC input terminal comprises: a first AC input terminal and a second AC input terminal, and the rectifier circuit comprises: a second diode, a third diode, a fourth diode and a fifth diode; wherein
a first terminal of the second diode is connected to the first AC input terminal, a second terminal of the second diode is connected to a second terminal of the third diode;
a first terminal of the third diode is connected to the second AC input terminal, and a second terminal of the third diode is connected to the charging pump circuit and the LLC resonant half-bridge circuit;
a first terminal of the fourth diode is connected to the charging pump circuit, and a second terminal of the fourth diode is connected to the second AC input terminal;
a first terminal of the fifth diode is connected to the charging pump circuit, and a second terminal of the fifth diode is connected to the first AC input terminal.

9. The drive circuit according to claim 6, wherein the charging pump circuit comprises: a second capacitor, a third capacitor, a fourth capacitor and a sixth diode;
a first terminal of the second capacitor is connected to the rectifier circuit and the LLC resonant half-bridge circuit, and a second terminal of the second capacitor is connected to a second terminal of the third capacitor;
a first terminal of the third capacitor is connected to a second terminal of the sixth diode, and a second terminal of the third capacitor is connected to the LLC resonant half-bridge circuit;
a first terminal of the fourth capacitor is connected to the rectifier circuit and a second terminal of the fourth capacitor is grounded;
a first terminal of the sixth diode is connected to the second terminal of the third capacitor, and a second terminal of the sixth diode is connected to a first terminal of the fourth capacitor.

10. The drive circuit according to claim 6, wherein the LLC resonant half-bridge circuit comprises: a second switch, a third switch, a first inductor, a second resistor, a third resistor, a fourth resistor, a fifth resistor, a sixth resistor, a seventh diode, a fifth capacitor and a transformer; the transformer comprises: a first primary winding, a first secondary winding corresponding to the first primary winding, a second primary winding and a second secondary winding corresponding to the second primary winding; wherein
a control pole of the second switch is connected to the control circuit, a first pole of the second switch is connected to the rectifier circuit and the charging pump circuit, and a second pole of the second switch is connected to a first terminal of the first inductor;
a control pole of the third switch is connected to the control circuit, a first pole of the third switch is connected to a first terminal of the first inductor, and a second pole of the third switch is connected to the charging pump circuit;
a second terminal of the first inductor is connected to a first input terminal of the first primary winding;
a second input terminal of the first primary winding is connected to a first terminal of the second resistor, and the first secondary winding is connected to the output circuit;
the first terminal of the second resistor is connected to the control circuit, and a second terminal of the second resistor is connected to a first terminal of the third resistor;
the first terminal of the third resistor is grounded, a second terminal of the third resistor is connected to a second pole of the third switch;
a first terminal of the fourth resistor is connected to the control circuit, and a second terminal of the fourth resistor is connected to a first terminal of the sixth resistor;
a first terminal of the fifth resistor is connected to the first terminal of the fourth resistor, and a second terminal of the fifth resistor is connected to the control circuit;
a first terminal of the sixth resistor is connected to a second terminal of the seventh diode, and a second terminal of the sixth resistor is connected to the control circuit;
a first terminal of the fifth capacitor is connected to the second terminal of the sixth resistor, and a second terminal of the fifth capacitor is connected to the second terminal of the fifth resistor;
a first terminal of the seventh diode is connected to a first input terminal of the second primary winding;
a second input terminal of the second primary winding is connected to the second terminal of the fifth capacitor and is grounded as well;
a first output terminal of the second secondary winding is connected to the first input terminal of the frequency modulation circuit, and a second output terminal of the second secondary winding is connected to the second input terminal of the frequency modulation circuit.

11. The drive circuit according to claim 6, wherein the output circuit comprises: an eighth diode, a ninth diode and a sixth capacitor; and wherein
a first terminal of the eighth diode is connected to the LLC resonant half-bridge circuit, and a second terminal of the eighth diode is connected to a first terminal of the sixth capacitor;
a first terminal of the ninth diode is connected to the LLC resonant half-bridge circuit, and a second terminal of the ninth diode is connected to the first terminal of the sixth capacitor;
a second terminal of the sixth capacitor is connected to both the LLC resonant half-bridge circuit and the frequency modulation circuit.

12. The drive circuit according to claim 6, wherein the control circuit comprises a control chip which comprises a first control terminal, a second control terminal, a third control terminal, a fourth control terminal, a power supply terminal and a grounding terminal;
wherein the first control terminal, the second control terminal, the third control terminal, the fourth control terminal, the power supply terminal and the grounding terminal are respectively connected to the LLC resonant half-bridge circuit.

13. The drive circuit according to claim 7, wherein the electromagnetic interference filter circuit comprises: a fuse resistor, a common mode inductor, a differential mode inductor and a seventh capacitor; and wherein
a first terminal of the fuse resistor is connected to the first AC input terminal, a second terminal of the fuse resistor is connected to a first terminal of the seventh capacitor;
a second terminal of the seventh capacitor is connected to the second AC input terminal;
a first input terminal of the common mode inductor is connected to the first terminal of the seventh capacitor, a second input terminal of the common mode inductor is connected to the second terminal of the seventh capacitor, a first output terminal of the common mode inductor is connected to the rectifier circuit, and a second output terminal of the common mode inductor is connected to a first terminal of the differential mode inductor;
a second terminal of the differential mode inductor is connected to the rectifier circuit.

14. The drive circuit according to any one of claims 7-13, wherein the AC input terminal comprises: the first AC input terminal and the second AC input terminal; the rectifier circuit comprises: the second diode, the third diode, the fourth diode and the fifth diode; the charging pump circuit comprises: the second capacitor, the third capacitor, the fourth capacitor and the sixth diode; the LLC resonant half-bridge circuit comprises: the second switch, the third switch, the first inductor, the second resistor, the third resistor, the fourth resistor, the fifth resistor, the sixth resistor, the seventh diode, the fifth capacitor and the transformer; the transformer comprises: the first primary winding, the first secondary winding corresponding to the first primary winding, the second primary winding and the second secondary winding corresponding to the second primary winding; the output circuit comprises: the eighth diode, the ninth diode and the sixth capacitor; the electromagnetic interference filter circuit comprises: the fuse resistor, the common mode inductor, the differential mode inductor and the seventh capacitor; the control circuit comprises the control chip that comprises the first control terminal, the second control terminal, the third control terminal, the fourth control terminal, the power supply terminal and the grounding terminal; wherein
the first terminal of the fuse resistor is connected to the first AC input terminal, the second terminal of the fuse resistor is connected to the first terminal of the seventh capacitor;
the second terminal of the seventh capacitor is connected to the second AC input terminal;
the first input terminal of the common mode inductor is connected to the first terminal of the seventh capacitor, the second input terminal of the common mode inductor is connected to the second terminal of the seventh capacitor, the first output terminal of the common mode inductor is connected to the first terminal of the second diode, and the second output terminal of the common mode inductor is connected to the first terminal of the differential mode inductor;
the second terminal of the differential mode inductor is connected to the first terminal of the third diode;
the second terminal of the second diode is connected to the second terminal of the third diode
the second terminal of the third diode is connected to the first terminal of the second capacitor;
the first terminal of the fourth diode is connected to the second terminal of the sixth diode, and the second terminal of the fourth diode is connected to the first terminal of the third diode;
the first terminal of the fifth diode is connected to the second terminal of the fourth capacitor, and the second terminal of the fifth diode is connected to the first terminal of the second diode;
the first terminal of the third capacitor is connected to the second terminal of the sixth diode, and the second terminal of the third capacitor is connected to the second terminal of the second capacitor;
the first terminal of the fourth capacitor is connected to the first terminal of the fifth diode, and the second terminal of the fourth capacitor is grounded;
the first terminal of the sixth diode is connected to the second terminal of the second capacitor, and the second terminal of the sixth diode is connected to the first terminal of the fourth diode;
the first terminal of the second capacitor is connected to the second terminal of the third diode, and the second terminal of the second capacitor is connected to the first terminal of the sixth capacitor;
the control pole of the second switch is connected to the first control terminal, the first pole of the second switch is connected to the first terminal of the second capacitor, and the second pole of the second switch is connected to the first terminal of the first inductor;
the control pole of the third switch is connected to the second control terminal, the first pole of the third switch is connected to the first terminal of the first inductor, and the second pole of the third switch is connected to the second terminal of the second capacitor;
the second terminal of the first inductor is connected to the first input terminal of the first primary winding;
the second input terminal of the first primary winding is connected to the first terminal of the second resistor;
the first output terminal of the first secondary winding is connected to the first terminal of the eighth diode, the second output terminal of the first secondary winding is connected to the first terminal of the ninth diode, and the third output terminal of the first secondary winding is connected to the second terminal of the sixth capacitor;
the first terminal of the second resistor is connected to the third control terminal, and the second terminal of the second resistor is connected to the first terminal of the third resistor;
the first terminal of the third resistor is grounded, the second terminal of the third resistor is connected to the second pole of the third switch;
the first terminal of the fourth resistor is connected to the fourth control terminal, and the second terminal of the fourth resistor is connected to the first terminal of the sixth resistor;
the first terminal of the fifth resistor is connected to the first terminal of the fourth resistor, and the second terminal of the fifth resistor is connected to the grounding terminal;
the first terminal of the sixth resistor is connected to the second terminal of the seventh diode, and the second terminal of the sixth resistor is connected to the power supply terminal;
the first terminal of the fifth capacitor is connected to the second terminal of the sixth resistor, and the second terminal of the fifth capacitor is connected to the second terminal of the fifth resistor;
the first terminal of the seventh diode is connected to the first input terminal of the second primary winding;
the second input terminal of the second primary winding is connected to the second terminal of the fifth capacitor and is grounded as well; the first output terminal of the second secondary winding is connected to the first terminal of the first diode, and the second output terminal of the second secondary winding is connected to the second terminal of the first capacitor;
the first terminal of the eighth diode is connected to the first output terminal of the first secondary winding, the second terminal of the eighth diode is connected to the first terminal of the sixth capacitor;
the first terminal of the ninth diode is connected to the second output terminal of the first secondary winding, the second terminal of the ninth diode is connected to the second terminal of the eighth diode;
the first terminal of the sixth capacitor is connected to the second terminal of the ninth diode, and the second terminal of the sixth capacitor is connected to the third output terminal of the first secondary winding and the second terminal of the first capacitor;
the first terminal of the first diode is connected to the first output terminal of the second secondary winding, and the second terminal of the first diode is connected to the first terminal of the first resistor;
the second terminal of the first resistor is connected to the first terminal of the regulator;
the first terminal of the first capacitor is connected to the second terminal of the first resistor, and the second terminal of the first capacitor is connected to the second output terminal of the second secondary winding;
the first terminal of the regulator is connected to the first terminal of the first capacitor, the second terminal of the regulator is connected to the first terminal of the microprocessor, and the third terminal of the regulator is connected to the second output terminal of the second secondary winding;
the second terminal of the microprocessor is connected to the control pole of the first switch, the third terminal of the microprocessor is connected to the second output terminal of the second secondary winding;
the first pole of the first switch is connected to the output terminal, and the second pole of the first switch is connected to the second output terminal of the second secondary winding.

15. The drive circuit according to claim 10, wherein the second switch and the third switch each comprise a triode.

16. An illumination system comprising the drive circuit according to any one of claims 6-15 and an LED load; wherein an anode of the LED load is connected to the output circuit to receive the first current output from the output circuit, and an cathode of the LED load is connected to the frequency modulation circuit to receive the second current output from the frequency modulation circuit.

17. A control method of a drive circuit for controlling the drive circuit according to any one of claims 6-15, comprising:
rectifying signals obtained from the AC input terminal by the rectifier circuit and outputting the rectified current, and converting the rectified current into the sinusoidal current for inputting into the LLC resonant half-bridge circuit through the charging pump circuit;
processing the sinusoidal current by the LLC resonant half-bridge circuit under the control of the control circuit so as to output the first signal and the second signal;
outputting the first current through the output circuit according to the first signal;
outputting the second current through the frequency modulation circuit under the control of the second signal;
wherein the first current is the constant current.

18. The control method according to claim 17, wherein outputting the second current through the frequency modulation circuit under the control of the second signal comprises:
converting the second signal into the DC signal through the rectification filter sub-circuit of the frequency modulation circuit;
converting the DC signal into the stable DC signal through the voltage stabilizing sub-circuit of the frequency modulation circuit;
generating the high-frequency driving signals through the control sub-circuit of the frequency modulation circuit under the control of the stable DC signal;
outputting the second current from the output terminal of the frequency modulation circuit under the control of the high frequency driving signals.
